# EUROPEAN PATENT SPECIFICATION

(11) **EP 4 208 841 B1**
(45) Date of publication and mention of the grant of the patent: **04.11.2026**
(21) Application number: 21766525.6
(22) Date of filing: 01.09.2021
(51) Int. Cl.: G06Q 50/26, H04W 4/90, G06Q 50/40

(54) **EMERGENCY COMMUNICATION SYSTEM**
NOTFALLKOMMUNIKATIONSSYSTEM
SYSTÈME DE COMMUNICATION D'URGENCE

(30) Priority: 01.09.2020 GB 202013720
(43) Date of publication of application: 12.07.2023
(73) Proprietor: McKinley, Daphne, 98000 Monaco (MC)
(72) Inventor: McKinley, Daphne, 98000 Monaco (MC)
(74) Representative: Valet Patent Services Limited
(86) International application number: PCT/IB2021/057994
(87) International publication number: WO 2022/049506

(56) References cited:
- US-A1- 2012 218 102
- FIA: "FIA Rally Safety Guidelines 2020", 31 January 2020 (2020-01-31), XP055856198, Retrieved from the Internet <URL:https://www.fia.com/file/120323/download> [retrieved on 20211029]

## Description

### Field of Invention

The present invention is in the field of communications. More particularly, but not exclusively, the present invention relates to emergency communications systems.

### Background

Telecommunications systems provide the ability for information to be transmitted and received over long distances. Some telecommunications use wired connections, others wireless and most modem systems use a combination of both.

Emergency telecommunications systems provide higher reliability for connecting emergency services to persons at the location of emergencies in order to dispatch help or provide verbal assistance. Such systems when overlaid on existing infrastructure are provide with prioritised or dedicated channels and/or prioritised delivery of messages.

US2012218102A1 describes a method of managing emergency response services. An emergency event is determined to have occurred. A set of civilian responders currently available to respond to the emergency event is selected from a plurality of civilian responders in response to determining that the emergency event has occurred. Each civilian responder in the set of civilian responders is associated with at least one wireless communication device. The set of civilian responders is notified that the emergency event has occurred. A set of emergency event information associated with the emergency event is transmitted to at least one wireless communication device associated with each civilian responder in the set of civilian responders.

However, there is a desire for improvements to such systems to facilitate the rapid dispatch of emergency services and/or the provision of information to assist such emergency services. Such improvements are particularly desirable for higher risk endeavours or activities such as motorsports where injuries are more life-threatening. Such information when delivered to medical centres treating injured participants can mean the difference between life and death.

It is an object of the present invention to provide an emergency communications system which overcomes the disadvantages of the prior art, or at least provides a useful alternative.

### Summary of Invention

The present invention is set out in the appended set of claims.

### Brief Description of the Drawings

Embodiments of the invention will now be described, by way of example only, with reference to the accompanying drawings in which:
Figure 1: shows a block diagram illustrating an emergency communications system in accordance with an embodiment of the invention;
Figure 2: shows a flow diagram illustrating an emergency communications method in accordance with an embodiment of the invention;
Figure 3: shows a flow diagram illustrating an emergency communications method in accordance with an embodiment of the invention;
Figure 4: shows a block diagram illustrating a datastore design for an emergency communications system in accordance with an embodiment of the invention; and
Figure 5: shows a sequence diagram illustrating communications within an emergency communications system in accordance with an embodiment of the invention.

### Detailed Description of Preferred Embodiments

The present invention provides an emergency communications system which accelerates the delivery of information from multiple sources to emergency services.

The inventor has determined that for activities where participants and assistants are known information can be obtained prior to the activity commencing. This information in accordance with particular roles for the individuals involved in the activity - whether participants or assistants - can be coordinated by a central server to ensure delivering of that information rapidly and accurately to appropriate emergency services without compromising any confidentiality in the information.

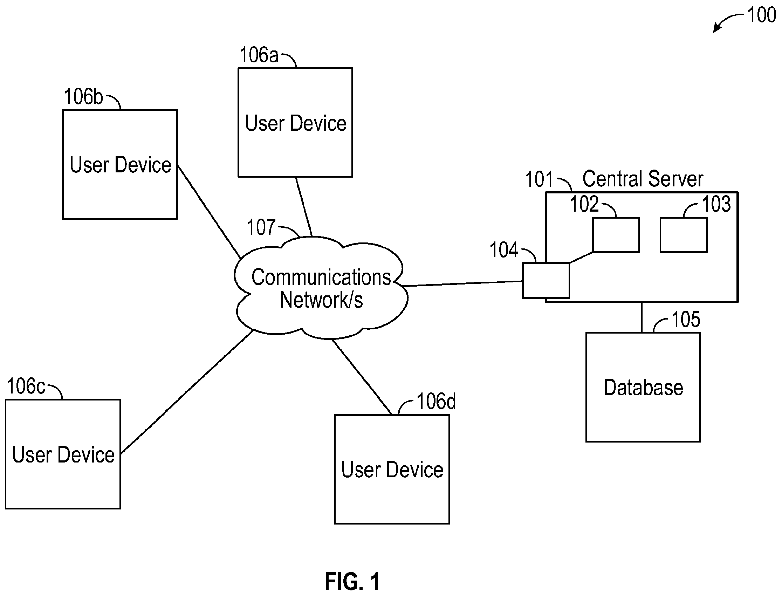

In Figure 1, an emergency communications system 100 in accordance with an embodiment of the invention is shown. The system 100 may be implemented for use in managing emergencies during pre-arranged events such as high risk sports events, including motorsports.

The system 100 includes a central coordination server 101. The central server 101 may include at least one processor 102, at least one local memory 103, and at least one communications apparatus 104.

The system 100 also includes a datastore 105. The datastore 105 is connected directly or indirectly to the central coordination server 101.

The system 100 also includes a plurality of communications devices (106a, 106b, 106c, and 106d, collectively 106). The communications devices 106 may be user devices. The user devices may include single-purpose communications devices for receiving and transmitting messages to and from the central coordination server, multi-purpose devices for both communication with the central coordination server and other devices and local processing, and general-purpose communication/processing devices. The user devices may include mobile devices including, at least, a processor, memory, display, input, and communications apparatus. The display/input may be combined into one such as a touch-screen display.

A least one of the communications devices (e.g. 106d) may be associated with emergency services or an emergency services user or users.

A communications network or networks (107) connects the communications devices 106 and the central coordination server 101.

The central coordination server 101 receives information from a plurality of users prior to any emergency. The server 101 stores this information within the datastore 105. The information may include personal information, medical information, and emergency contact information relating to a participant in an event. The information may, at least in part, be received via the communications devices 106.

The central coordination server 101 is adapted to, during an emergency, coordinate and/or augment communications to and from the plurality of communications devices 106 in accordance with the information received prior to the emergency occurring. Further details on the coordination and/or augmentation actions taken by the central server 101 may be found in relation to the description corresponding to the remaining Figures.

It will be appreciated that the functions of the central server 101 may be distributed amongst a plurality of components. For example, one component of the central server 101 receiving and storing the information, and another component of the central server 101 retrieving and using the information to coordinate/augment the communications. It will also be appreciated, considering typical cloud architectures, that any components need not be physically co-located.

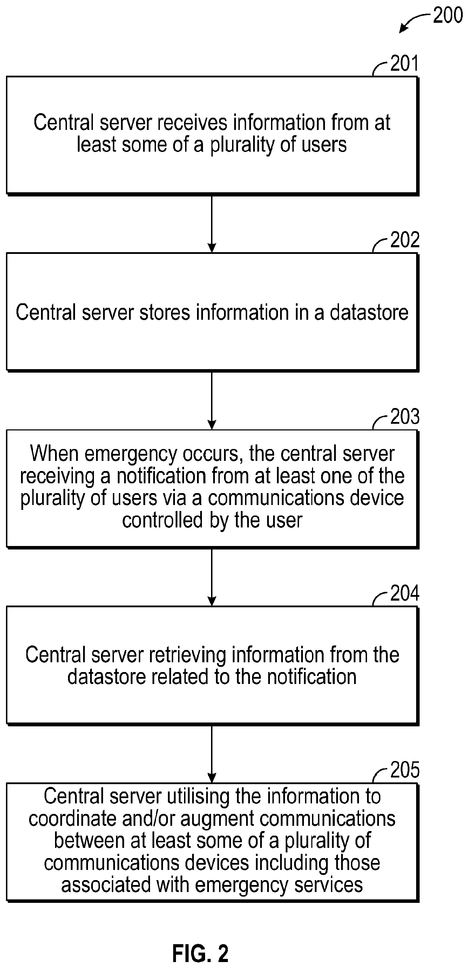

Referring to Figure 2, a method 200 for delivering communications within an emergency communications system will be described. The system may be implemented for use within events as described in relation to Figure 1.

In step 201, information is received at the central server from at least some of a plurality of users. Each of the plurality of users is assigned or associated or defined with one of a plurality of roles. The roles may include participant, monitor, emergency services, and/or administrator. Where the event is a motorsports event, the monitor role may include a pitcrew and marshal role, and the participant may be a driver.

The information is received prior to any emergency occurring during the event. As noted above, the information may include personal information (such as name, address, date of birth), medical information (such as blood group/type, known allergies such as blood allergies, last tetanus injection date, etc.), and emergency contact details (name, relationship, contact number/details).

In step 202, the central server stores the information within a datastore. The information is associated with an identifier for the user. For example, information relating to a participant may be stored associated with an identifier for that participant within the datastore.

During an event, at least some of the plurality of users may transmit a notification to the central server to activate their involvement with the event. The notification may be transmitted via a communications device for each user. The central server may store which of the plurality of users, with their associated role, are involved in an event.

In some embodiments, the location of at least some of the plurality of users may be updated or transmitted regularly or periodically to the central server.

In some embodiments, multiple locations may be determined for the same user. These locations may be determined at the same time or similar time using different methods, or may be captured over a period of time and associated with a time-stamp. In this way, location information can be captured which address the problems of errors (such as errors in GPS or in the user moving). Different location capturing methodologies are utilised based upon the role of the user (for example, a marshal role may utilise a beacon or capture of a QR code at their post, and a driver role may utilise a GPS location when they arrive at the race track). The different location methods are selected from the set of mobile device GPS or A-GPS, beacon detection, and QR code scanning. It will be appreciated that this set of location methods may include additional technologies.

In step 203, when an emergency incident occurs, at least one of the plurality of users transmits a notification to the central server of the emergency incident. The notification may include one or more of the following details: identifier/identifiers of the affected participants (e.g. victims of the incident) and location of the incident. In some embodiments, the periodically/regularly transmitted location is utilised by the central server to augment the notification.

In some embodiments, a location may be determined at the device of the user to transmit along with the notification.

In step 204, the central server retrieves at least some of the information from the datastore. In one embodiment, the participant identifier/identifiers provided within the notification are utilised to retrieve information associated with that participant from the datastore.

In step 205, the central server utilises the retrieved information to coordinate and/or augment communications to at least some of the communications devices. For example, a notification may be transmitted to one or more communications devices associated with emergency services augmented with the personal information, medical information, emergency contact information, and/or location of incident. In one embodiment, the central server may coordinate transmission of a notification about the emergency to a communications device associated with an administrator role. The notification may be augmented with the personal information relating to the affected participant/participants, and/or details about the incident. The central server may receive from the communications device of the administrator confirmation to proceed with transmission to one or more emergency services communications devices as noted above, and may include selection of the recipient of the transmission between a plurality of emergency service users. In one embodiment, the central server may receive a notification from the emergency services communication device including information relating to the emergency. The information may include which hospital the affected participant/participants are being transported to. The central server may utilise the emergency contact information associated with the affected participant/participants to transmit messages to an emergency contact which relate to the hospital and/or incident.

In some embodiments, the central server may coordinate and/or augment the communications using the location of the user device as the location of the incident. In these circumstances, the central server may determine the best known location of the user device (based on stored historical locations and/or locations based on different location methods) as the location of the incident, or may send several locations (for example, of the user device) to enable the recipient(s) to make an assessment themselves as to the specific location of the incident.

In some embodiments, the central server may utilise notifications from a plurality of users to coordinate and/or augment communications. For example, locations for each of the users may be used to determine the location of the incident or each of the notifications may result in several transmissions of the same incident to provide a fuller picture of the incident to the recipient(s).

In embodiments, each of the roles may be associated with an access level to the information stored within the datastore. The central server may control augmentation of communications based upon the access level associated with the role. According to the claim, the participant roles are only able to access information associated with their own identifier, the monitor roles are only able to access personal details associated with participants, the administrator are able to access all information, and the emergency services are able to access, at least, medical details.

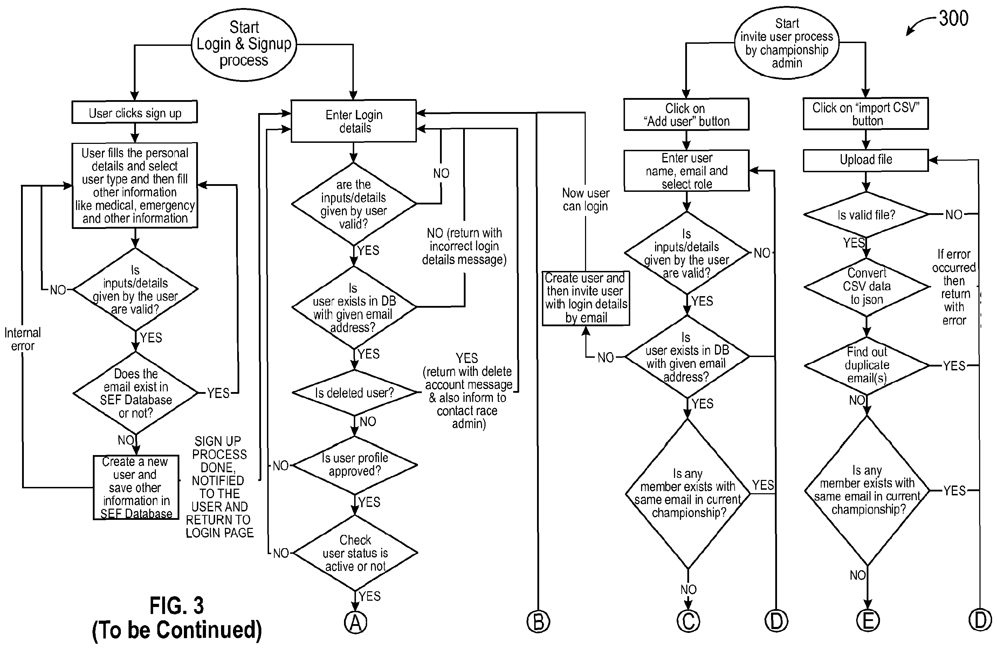

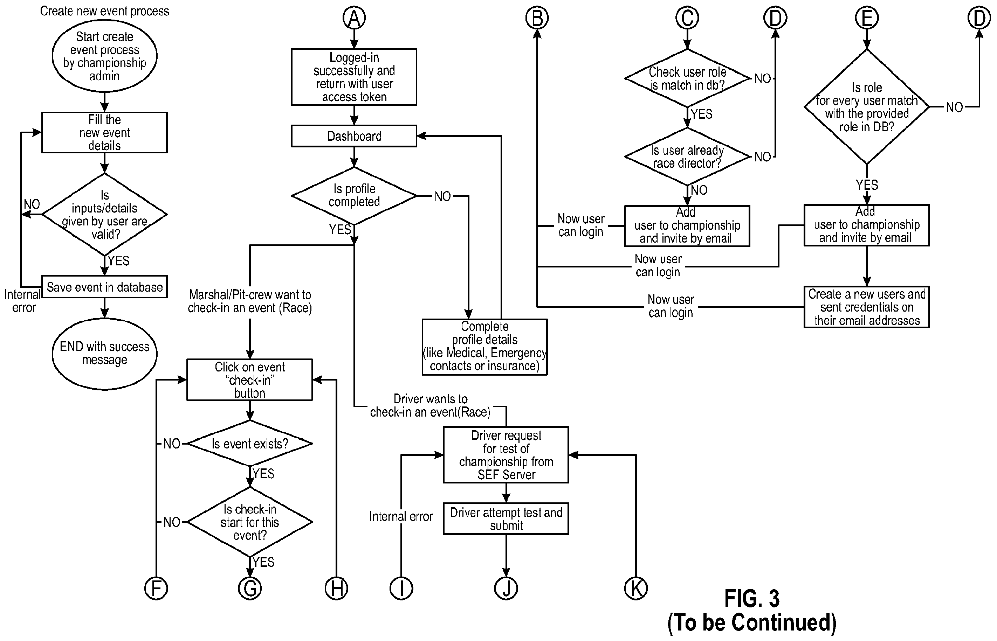

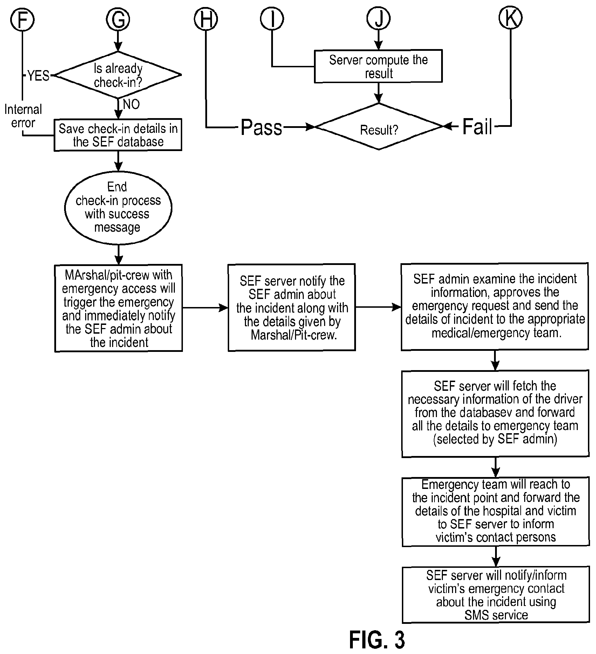

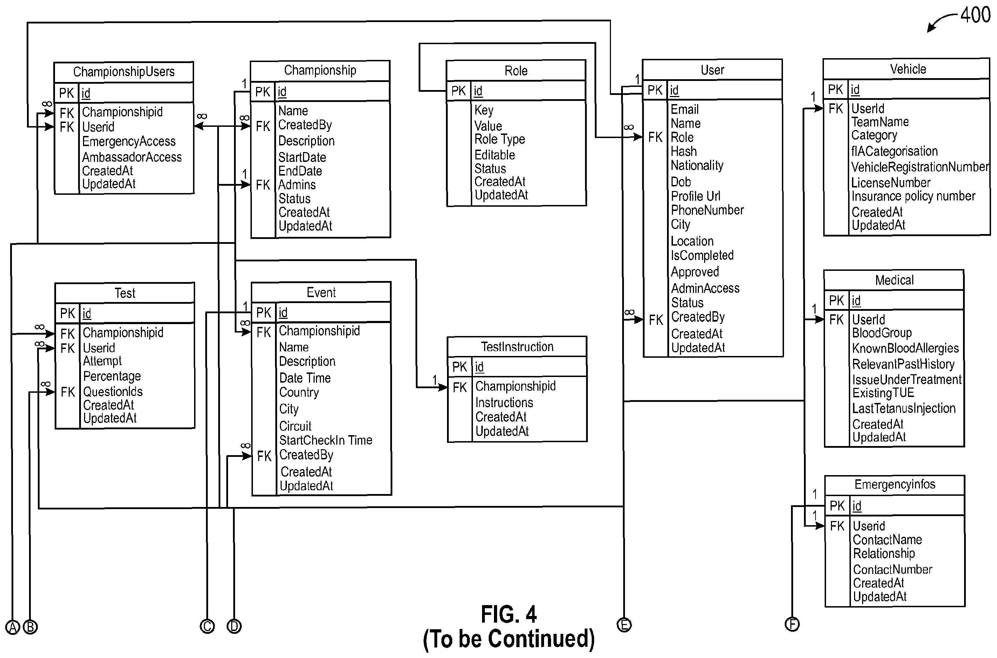

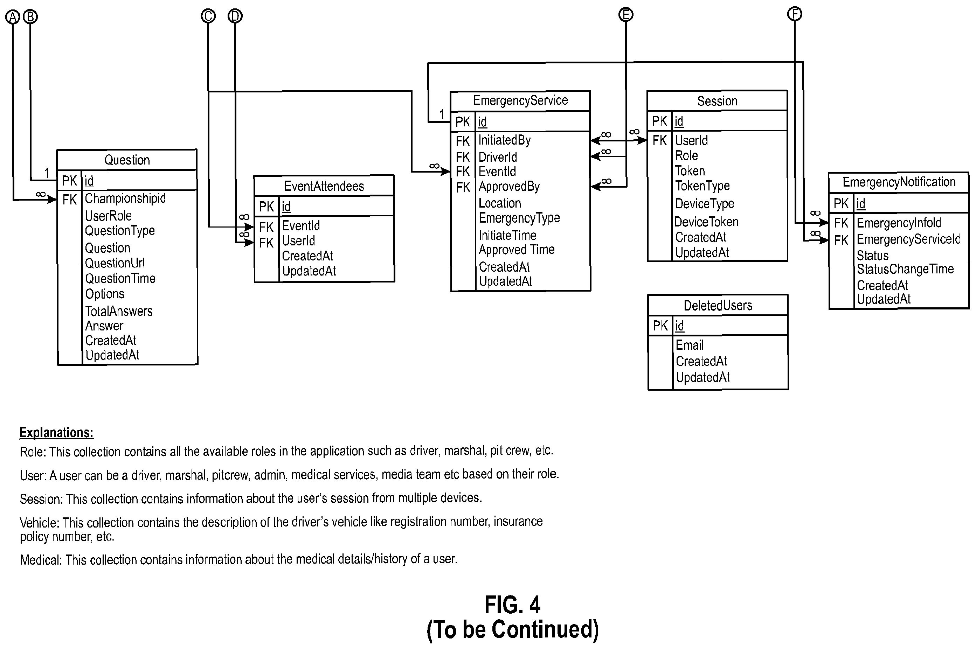

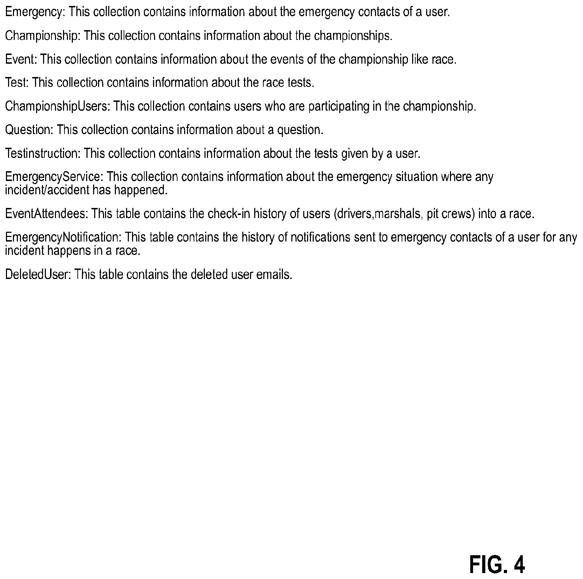

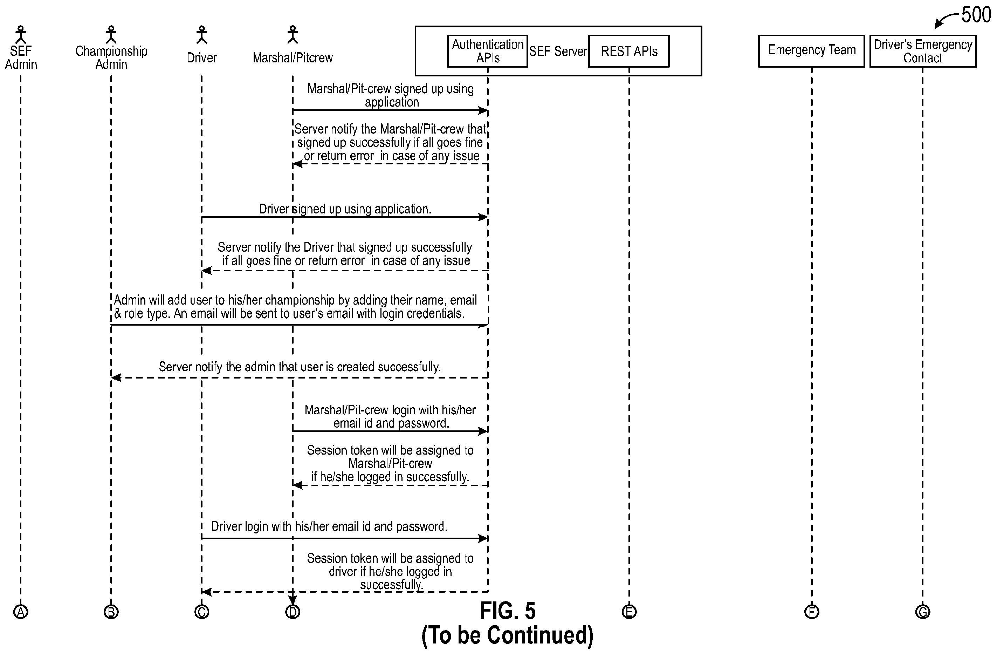

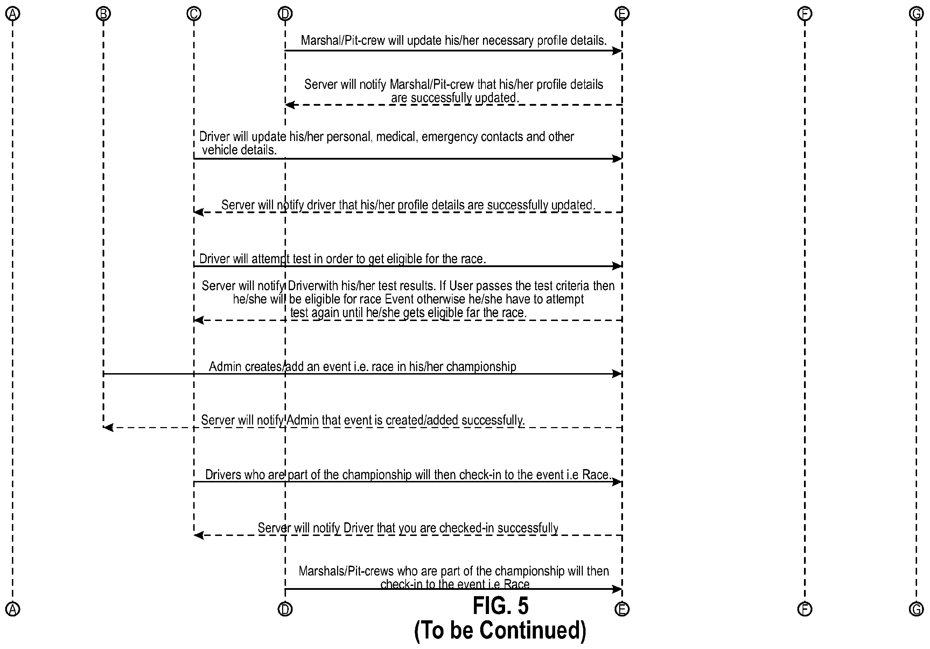

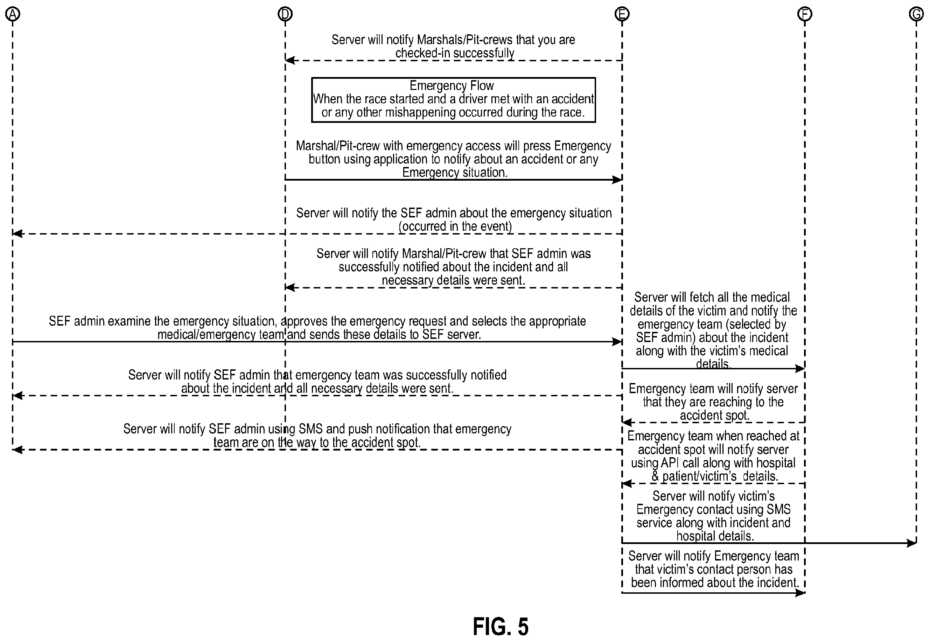

Referring to Figures 3, 4, and 5, embodiments of the present invention will now be described.

In this particular embodiments, the following features may be present:
1. Accounts/roles within the Database:
   - SEF-Admin
   - Driver
   - Pitcrew (with Emergency Access)
   - Marshal (with Emergency Access)
   - Championship Admin
   - Emergency teams
2. Details of Driver within the Database:
   - Personal details (Name, Address, DOB etc.)
   - Medical details (Blood group, Known blood allergies, last tetanus injection date, any issues under treatment, insurance policy details, any relevant past medical history, etc.)
   - Emergency contact details (name, relationship, contact number etc.)
3. Details related to an event present in the Database:
   - Championship should be added in the database.
   - An Event under championship should be added in the database.
   - Driver, Pit-crew and Marshal should be checked in the same event.

One or more of the following steps may be performed:
1. When an emergency incident occurs during an event then Marshal or Pit-crew will send an emergency indication to Server along with the victim's id (i.e. victim's user-id) by using a mobile application.
2. The server will then immediately notify the admin (who is the only user to have the access to examine Victim and Emergency incident's details) about the incident who will then examine all the accident details and thereby approve the emergency request.
3. The admin will then select the appropriate emergency/medical team for that particular incident and requests the server to notify the medical team.
4. The server will then immediately fetch the victim's details (i.e. Medical details and Emergency contacts) using the victim's user id from the database and notify the emergency/medical team (as selected by admin in step 3) about the incident along with all the necessary details of the victim.
5. The Emergency team will then respond to the request assigned by the admin and thus notify the Server that they are going to take care of this emergency or accident.
6. The server will therefore notify the admin that the emergency team will shortly reach the incident point.
7. Once the Emergency team arrives at the incident point then they will notify the server about the Hospital's details to which they are taking the victim/patient to.
8. The Server will then notify the victim's emergency contacts using an SMS along with the details of the Hospital.

In some embodiments, the emergency team does not provide the server with information about the Hospital details. Furthermore, in some embodiments, a user may utilise the emergency contact details obtained from the server to notify the victim's emergency contacts.

In some embodiments, all roles which meet a specific access level may receive the accident details from the server such that the system may operate in a role-decentralised way rather than through an admin. Therefore, an admin may not select a specific emergency team to address an incident as the emergency teams will be notified.

In some embodiments, a series of structured questions and structured answers may be provided to the user who has sent the emergency indication to enable the capture of additional information to coordinate and/or augment the incident details. The structured questions and structured answers may be defined for a specific event type and/or a specific event.

In some embodiments, the recipient(s) of the emergency indication may requested further details from the user who sent the emergency indication. Questions requesting these details may be provided to the recipient(s) for their selection.

A potential advantage of some embodiments of the present invention is that, during emergencies in events, information relevant to the affected participant(s) can be rapidly obtained and accurately communicated or utilised.

A further potential advantage is that, during emergencies in event, information security is maintained by ensuring that communications are augmented with information relevant to the access level of a specific role.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described.

## Claims

1. A method for providing emergency communications, including:
a) a central server obtaining and storing, within a datastore connected to the central server, information transmitted from at least some of a plurality of users, via user communication devices, prior to an emergency during an event, wherein each of the plurality of users is associated with a role, wherein the roles include participant, monitor, administrator, and emergency service, and wherein the information includes at least personal details, medical details, and emergency contact details provided for each of the plurality of users with the participant role, and a location of the at least some of a plurality of users, wherein the location information is obtained by the central server periodically prior to an emergency during the event to update the location of the at least some of a plurality of users, wherein the location information is captured using different location capturing methods based upon the role of the user and selected from mobile device GPS or A-GPS, beacon detection, and QR code scanning; and
b) during an emergency, the central server coordinating communications between at least some of the plurality of users via the corresponding user communication devices;
c) during an emergency, the central server receiving an indication of the emergency from at least one of the plurality of users via a user communication device, the indication including an identifier of at least one affected user associated with the participant role;
d) the central server retrieving, from the datastore, the stored information associated with the identifier of the at least one affected user;
wherein the central server augments and coordinates communications using the information previously provided by the at least some of the plurality of users and wherein at least one of the user devices is associated with the emergency service role,
wherein the communications are tailored based on the role of each user, and
wherein the central server controls access to the retrieved information based on the role of each user, such that:
the participants can only access information associated with their own identifier,
the monitors can only access personal details of the participants,
the emergency services can access at least medical details of the participants, and

2. A method as claimed in claim 1, wherein, during the emergency, a location of the emergency is determined by the central server in accordance with the previously obtained information.

3. A method as claimed in claim 1 or 2, wherein the event is a motorsports event, wherein the role of participants includes the role of drivers and wherein the role of monitors include the role of pitcrew and the role of marshals.

4. A method as claimed in any one of the preceding claims, wherein, during an emergency, the central server:
receives the indication of the emergency from a user device associated with the monitor role;
transmits a notification to the user device associated with the administrator role including the emergency indication;
receives an approval from the user device associated with the administrator role;
retrieves the medical and the emergency contact details associated with the identifier of the affected user; and
transmits a notification and the medical and emergency contact details to the user device associated with the emergency service role.

5. A method as claimed in claim 1, wherein, during an emergency, the central server:
receives hospital information from the user device associated with the emergency service role; and
transmits a message including the hospital information using the emergency contact details associated with the identifier of the affected user.

6. A method as claimed in claim 1, wherein the periodically obtained location is utilized by the central server to augment the indication of the emergency.

7. An emergency communications system, including:
a plurality of user communication devices, each associated with one of at least some of a plurality of users;
a central server configured to obtain and store information from at least some of the plurality of users, via user communication devices, prior to an emergency during an event, and, during an emergency, coordinate communications between at least some of the plurality of users via the corresponding user communication devices; and
a datastore configured to store the information and connected to the central server;
wherein each of the plurality of users is associated with a role, wherein the roles include participant, monitor, administrator, and emergency service, and wherein the information includes at least personal details, medical details, and emergency contact details provided for each of the plurality of users with the participant role, and a location of the at least some of a plurality of users, wherein the central server is configured to obtain the location information periodically prior to an emergency during the event to update the location of the at least some of a plurality of users, wherein the system is configured such that the location information is captured using different location capturing methods based upon the role of the user and selected from mobile device GPS or A-GPS, beacon detection, and QR code scanning;
wherein during an emergency, the central server is configured to receive an indication of the emergency from at least one of the plurality of users via a user communication device, the indication including an identifier of at least one affected user associated with the participant role;
wherein the central server is configured to retrieve, from the datastore, at least some of the stored information associated with the identifier of the at least one affected user;
wherein the central server augments and coordinates communications using the information previously provided by the plurality of users and wherein at least one of the user devices is associated with the emergency service role,
wherein the communications are tailored based on the role of each user, and
wherein the central server is configured to control access to the retrieved information based on the role of each user, such that:
the participants can only access information associated with their own identifier,
the monitors can only access personal details of the participants,
the emergency services can access at least medical details of the participants, and
the administrators can access all the retrieved information.

8. A computer program configured for performing the method of any one of claims 1 to 6 when executed on a processor.

## Patentansprüche

1. Verfahren zum Bereitstellen von Notfallkommunikation, einschließlich:
a) eines zentralen Servers, der Informationen von mindestens einigen einer Vielzahl von Benutzern über Kommunikationsvorrichtungen vor einem Notfall während eines Ereignisses erhält und speichert, wobei jedem der Vielzahl von Benutzern eine Rolle zugeordnet ist, wobei die Rollen Teilnehmer, Beobachter, Administrator und Rettungsdienst einschließen und wobei die Informationen mindestens persönliche Angaben, medizinische Angaben sowie Notfallkontaktdaten, die für jedes der Vielzahl von Benutzern mit der Rolle "Teilnehmer" bereitgestellt werden, sowie den Standort der mindestens einige der Benutzer, wobei die Standortinformationen vom zentralen Server vor einem Notfall während der Veranstaltung in regelmäßigen Abständen erfasst werden, um den Standort der mindestens einigen der Benutzer zu aktualisieren, wobei die Standortinformationen unter Verwendung verschiedener Standort erfassender Verfahren erfasst werden, die von der Rolle des Benutzers abhängen und aus GPS oder A-GPS der mobilen Vorrichtung, Beacon-Erkennung und QR-Code-Scannen; und
b) der zentrale Server während eines Notfalls die Kommunikation zwischen mindestens einigen der Vielzahl von Benutzern über die entsprechenden Kommunikationsvorrichtungen koordiniert;
c) der zentrale Server während eines Notfalls über eine Kommunikationsvorrichtung von mindestens einem der vielen Benutzer eine Meldung über den Notfall empfängt, wobei die Meldung eine Kennung mindestens eines betroffenen Benutzers einschließt, die der Teilnehmerrolle zugeordnet ist;
d) der zentrale Server aus dem Datenspeicher die gespeicherten Informationen abruft, die der Kennung des mindestens einen betroffenen Benutzers zugeordnet sind;
wobei der zentrale Server die Kommunikation unter Verwendung der zuvor von mindestens einigen der Vielzahl von Benutzern bereitgestellten Informationen ergänzt und koordiniert und wobei mindestens eine der Benutzervorrichtungen der Rolle des Notfalldienstes zugeordnet ist, wobei die Kommunikation basierend auf der Rolle jedes Benutzers angepasst wird, und wobei der zentrale Server den Zugang zu den abgerufenen Informationen basierend auf der jeweiligen Rolle jedes Nutzers steuert, sodass:
die Teilnehmer nur auf Informationen zugreifen können, die ihrer eigenen Kennung zugeordnet sind,
die Beobachter nur auf die persönlichen Daten der Teilnehmer zugreifen können,
die Rettungsdienste mindestens auf die medizinischen Daten der Teilnehmer zugreifen können und
die Administratoren auf alle abgerufenen Informationen zugreifen können.

2. Verfahren nach Anspruch 1, wobei während des Notfalls der Standort des Notfalls vom zentralen Server gemäß den zuvor erhaltenen Informationen bestimmt wird.

3. Verfahren nach Anspruch 1 oder 2, wobei es sich bei der Veranstaltung um eine Motorsportveranstaltung handelt, wobei die Rollen der Teilnehmer die Rolle der Fahrer einschließen und wobei die Rollen der Beobachter die Rolle der Boxencrew sowie die Rolle der Streckenposten einschließen.

4. Verfahren nach einem der vorstehenden Ansprüche, wobei der zentrale Server während eines Notfalls:
die Meldung des Notfalls von einer mit der Beobachterrolle verbundenen Vorrichtung empfängt;
eine Benachrichtigung an die der Administratorrolle zugeordnete Vorrichtung sendet, die die Notfallmeldung einschließt;
eine Genehmigung von dem mit der Administratorrolle verbundenen Benutzergerät empfängt;
die medizinischen Daten sowie die Notfallkontaktdaten abruft, die der Kennung des betroffenen Benutzers zugeordnet sind; und
eine Benachrichtigung sowie die medizinischen Daten und die Notfallkontaktdaten an die mit der Rettungsdienstrolle verbundene Benutzervorrichtung sendet.

5. Verfahren nach Anspruch 1, wobei der zentrale Server im Notfall:
Krankenhausinformationen von der mit der Notfalldienstrolle assoziierten Benutzervorrichtung empfängt; und
eine Nachricht, die die Krankenhausinformationen einschließlich der mit der Kennung des betroffenen Benutzers assoziierten Notfallkontaktdaten enthält, übermittelt.

6. Verfahren nach Anspruch 1, wobei der in regelmäßigen Abständen erhaltene Standort vom zentralen Server genutzt wird, um die Anzeige des Notfalls zu ergänzen.

7. Notfallkommunikationssystem, einschließlich:
einer Vielzahl von Benutzerkommunikationsvorrichtungen, von denen jede einem von mindestens einigen Benutzern zugeordnet ist;
eines zentralen Servers, der so konfiguriert ist, dass er vor einem Notfall während eines Ereignisses Informationen von mindestens einigen der Vielzahl von Benutzern über die Kommunikationsvorrichtungen erhält und speichert und während eines Notfalls die Kommunikation zwischen mindestens einigen der Vielzahl von Benutzern über die entsprechenden Kommunikationsvorrichtungen koordiniert; und einen Datenspeicher, der so konfiguriert ist, dass er die Informationen speichert, und der mit dem zentralen Server verbunden ist;
wobei jedem der Vielzahl von Benutzern eine Rolle zugeordnet ist, wobei die Rollen Teilnehmer, Beobachter, Administrator und Notfalldienst einschließen, und wobei die Informationen mindestens persönliche Angaben, medizinische Angaben sowie Notfallkontaktdaten einschließen, die für jeden der Vielzahl von Benutzern mit der Rolle "Teilnehmer" bereitgestellt werden, sowie den Standort mindestens einiger der Vielzahl von Benutzern, wobei der zentrale Server so konfiguriert ist, dass er die Standortinformationen vor einem Notfall während der Veranstaltung in regelmäßigen Abständen abruft, um den Standort mindestens einiger der Vielzahl von Benutzern zu aktualisieren, wobei das System so konfiguriert ist, dass die Standortinformationen unter Verwendung verschiedener Standort erfassender Verfahren erfasst werden, die auf der Rolle des Nutzers basieren und aus GPS oder
A-GPS von mobilen Vorrichtungen, Beacon-Erkennung und dem Scannen von QR-Codes ausgewählt werden;
wobei der zentrale Server so konfiguriert ist, dass er im Notfall über eine Benutzerkommunikationsvorrichtung von mindestens einem der zahlreichen Benutzer eine Meldung über den Notfall empfängt, wobei die Meldung eine Kennung mindestens eines betroffenen Benutzers einschließt, der der Teilnehmerrolle zugeordnet ist;
wobei der zentrale Server so konfiguriert ist, dass er aus dem Datenspeicher mindestens einen Teil der gespeicherten Informationen abruft, die der Kennung des mindestens einen betroffenen Benutzers zugeordnet sind;
wobei der zentrale Server die Kommunikation unter Verwendung der zuvor von der Vielzahl von Benutzern bereitgestellten Informationen erweitert und koordiniert und wobei mindestens eine der Benutzervorrichtungen der Rolle des Notfalldienstes zugeordnet ist,
wobei die Kommunikation basierend auf der Rolle jedes Benutzers angepasst wird und
wobei der zentrale Server so konfiguriert ist, dass er den Zugang zu den abgerufenen Informationen basierend auf der Rolle jedes Benutzers steuert, sodass:
die Teilnehmer nur auf Informationen zugreifen können, die ihrer eigenen Kennung zugeordnet sind,
die Beobachter nur auf die persönlichen Daten der Teilnehmer zugreifen können,
die Rettungsdienste mindestens auf die medizinischen Daten der Teilnehmer zugreifen können und
die Administratoren auf alle abgerufenen Informationen zugreifen können.

8. Computerprogramm, das so konfiguriert ist, dass es bei Ausführen auf einem Prozessor das Verfahren gemäß einem der Ansprüche 1 bis 6 durchführt.

## Revendications

1. Procédé de fourniture de communications d'urgence, comportant :
a) un serveur central obtenant et stockant, dans une banque de données connectée au serveur central, des informations transmises à partir d'au moins une partie d'une pluralité d'utilisateurs, par l'intermédiaire de dispositifs de communication utilisateurs, avant une urgence pendant un événement, dans lequel chacun de la pluralité d'utilisateurs est associé à un rôle, dans lequel les rôles incluent un participant, un moniteur, un administrateur, et un service d'urgence, et dans lequel les informations comportent au moins des détails personnels, des détails médicaux, et des détails de contact en cas d'urgence fournies pour chacun de la pluralité d'utilisateurs avec le rôle de participant, et un emplacement de l'au moins une partie d'une pluralité d'utilisateurs, dans lequel les informations d'emplacement sont obtenues par le serveur central de façon périodique avant une urgence pendant l'évènement pour mettre à jour l'emplacement de l'au moins une partie d'une pluralité d'utilisateurs, dans lequel les informations d'emplacement sont collectées à l'aide de différentes méthodes de collecte d'emplacement en fonction du rôle de l'utilisateur et choisies parmi le GPS ou l'A-GPS de dispositif mobile, la détection de balise, et le balayage de code QR ; et
b) pendant une urgence, le serveur central coordonnant les communications entre au moins une partie de la pluralité d'utilisateurs par l'intermédiaire des dispositifs de communication utilisateurs correspondants ;
c) pendant une urgence, le serveur central recevant une indication de l'urgence en provenance d'au moins l'un parmi la pluralité d'utilisateurs par l'intermédiaire d'un dispositif de communication utilisateur, l'indication comportant un identifiant d'au moins un utilisateur affecté associé au rôle de participant ;
d) le serveur central récupérant, à partir de la banque de données, les informations stockées associés à l'identifiant de l'au moins un utilisateur affecté ;
dans lequel le serveur central augmente et coordonne les communications à l'aide des informations fournies précédemment par l'au moins une partie de la pluralité d'utilisateurs et dans lequel au moins l'un parmi les dispositifs utilisateurs est associé au rôle de service d'urgence,
dans lequel les communications sont adaptées sur la base du rôle de chaque utilisateur, et
dans lequel le serveur central contrôle l'accès aux informations récupérées sur la base du rôle de chaque utilisateur, de telle sorte que :
les participants puissent seulement accéder aux informations associées à leur propre identifiant,
les moniteurs puissent seulement accéder aux détails personnels des participants,
les services d'urgence puissent accéder au moins aux détails médicaux des participants, et
les administrateurs puissent accéder à toutes les informations récupérées.

2. Procédé selon la revendication 1, dans lequel, pendant l'urgence, un emplacement de l'urgence est déterminé par le serveur central conformément aux informations obtenues précédemment.

3. Procédé selon la revendication 1 ou 2, dans lequel l'événement est un événement de sport mécanique, dans lequel le rôle de participants inclut le rôle de conducteurs et dans lequel le rôle de moniteurs inclut le rôle d'équipage et le rôle de gardiens.

4. Procédé selon l'une quelconque des revendications précédentes, dans lequel, pendant une urgence, le serveur central :
reçoit l'indication de l'urgence en provenance d'un dispositif utilisateur associé au rôle de moniteur ;
transmet une notification au dispositif utilisateur associé au rôle d'administrateur comportant l'indication d'urgence ;
reçoit une approbation en provenance du dispositif utilisateur associé au rôle d'administrateur ;
récupère les détails médicaux et de contact en cas d'urgence associés à l'identifiant de l'utilisateur affecté ; et
transmet une notification et les détails médicaux et de contact en cas d'urgence au dispositif utilisateur associé au rôle de service d'urgence.

5. Procédé selon la revendication 1, dans lequel, pendant une urgence, le serveur central :
reçoit des informations d'hôpital en provenance du dispositif utilisateur associé au rôle de service d'urgence ; et
transmet un message comportant les informations d'hôpital à l'aide des détails de contact en cas d'urgence associés à l'identifiant de l'utilisateur affecté.

6. Procédé selon la revendication 1, dans lequel l'emplacement obtenu de façon périodique est utilisé par le serveur central pour augmenter l'indication de l'urgence.

7. Système de communications d'urgence, comportant :
une pluralité de dispositifs de communication utilisateurs, chacun associé à l'un parmi au moins une partie d'une pluralité d'utilisateurs ;
un serveur central configuré pour obtenir et stocker des informations en provenance d'au moins une partie de la pluralité d'utilisateurs, par l'intermédiaire de dispositifs de communication utilisateurs, avant une urgence pendant un événement, et, pendant une urgence, coordonner les communications entre au moins une partie de la pluralité d'utilisateurs par l'intermédiaire des dispositifs de communication utilisateurs correspondants ; et
une banque de données configurée pour stocker les informations et connectée au serveur central ;
dans lequel chacun de la pluralité d'utilisateurs est associé à un rôle, dans lequel les rôles incluent un participant, un moniteur, un administrateur, et un service d'urgence, et dans lequel les informations comportent au moins des détails personnels, des détails médicaux, et des détails de contact en cas d'urgence fournies pour chacun de la pluralité d'utilisateurs avec le rôle de participant, et un emplacement de l'au moins une partie d'une pluralité d'utilisateurs, dans lequel le serveur central est configuré pour obtenir les informations d'emplacement de façon périodique avant une urgence pendant l'évènement pour mettre à jour l'emplacement de l'au moins une partie d'une pluralité d'utilisateurs, dans lequel le système est configuré de telle sorte que les informations d'emplacement soient collectées à l'aide de différentes méthodes de collecte d'emplacement en fonction du rôle de l'utilisateur et choisies parmi le GPS ou l'A-GPS de dispositif mobile, la détection de balise, et le balayage de code QR ;
pendant une urgence, le serveur central recevant une indication de l'urgence en provenance d'au moins l'un parmi la pluralité d'utilisateurs par l'intermédiaire d'un dispositif de communication utilisateur, l'indication comportant un identifiant d'au moins un utilisateur affecté associé au rôle de participant ;
le serveur central récupérant, à partir de la banque de données, les informations stockées associés à l'identifiant de l'au moins un utilisateur affecté ;
dans lequel le serveur central augmente et coordonne les communications à l'aide des informations fournies précédemment par la pluralité d'utilisateurs et dans lequel au moins l'un parmi les dispositifs utilisateurs est associé au rôle de service d'urgence,
dans lequel les communications sont adaptées sur la base du rôle de chaque utilisateur, et
dans lequel le serveur central est configuré pour contrôler l'accès aux informations récupérées sur la base du rôle de chaque utilisateur, de telle sorte que :
les participants puissent seulement accéder aux informations associées à leur propre identifiant,
les moniteurs puissent seulement accéder aux détails personnels des participants,
les services d'urgence puissent accéder au moins aux détails médicaux des participants, et
les administrateurs puissent accéder à toutes les informations récupérées.

8. Programme informatique configuré pour réaliser le procédé selon l'une quelconque des revendications 1 à 6 lorsqu'il est exécuté sur un processeur.
